# EUROPEAN PATENT APPLICATION

(11) **EP 1 533 913 A1**
(43) Date of publication of application: **25.05.2005**
(21) Application number: 03292855.8
(22) Date of filing: 18.11.2003
(51) Int. Cl.: H04B 3/54

(54) **System for transmitting data**

(71) Applicant: Alcatel, 92734 Nanterre Cedex (FR)
(72) Inventor: Fernandez Duran, Alfonso, 28229 Madrid (ES)
(74) Representative: Lamoureux, Bernard

(57) **Abstract**

System for transmitting data to a moving unit (11) coupled to a overhead line, a plurality of converting units (13) supplying power to the overhead line, wherein the system includes a first (14) means configured to extract and to inject data signals over the overhead line according to power line communication techniques and, furthermore, the first (14) means likewise being connected to a telecommunication network (20).

## Description

### OBJECT OF THE INVENTION

The present invention relates to a system of data transmission between the ground and moving units. More particularly, the present invention is directed to a plurality of repeater units and signal insertion units located along a railway network for transmitting data whilst moving railway units are travelling.

### STATE OF THE ART

Various systems are already known allowing communication between a train and the ground to permit a user, i.e., passenger, in the train to receive and/or transmit information from and/or to another user of a telecommunication network.

One system of transmitting information between a train and the ground is indicated in Patent document U.S. 5.496.003. There the transmission system features installed at regular intervals a plurality of transmission beacons which provide coverage in the direction of displacement of a mobile telephone which moves on a railway network. The train comprises an antenna whose range is superior to the coverage of each of the beacons, respectively, in order to provide a continuous link during the time the train is moving.

A drawback of the mentioned system of transmitting information is that the capacity of the bi-directional transmission depends on the distance existing between the train and at least one beacon. That is, if the train is to be found permanently above one beacon at least and, sometimes two, this allows output of even a greater number of telephone communications. If a train is above a beacon depends on the length of the train and the distance between successive beacons.

In brief, the system of transmission offers greater capacity for communication the longer the train and the less distance between beacons, consequently the transmission system mentioned above is of high cost since it requires a large number of beacons and, therefore, cables and the train has to have a length greater than a minimum threshold, in order to guarantee minimum transmission capacity to a train user.

Accordingly, it becomes necessary to develop a system of communications that will allow exchange of any type of information, previously digitalized, regardless of its nature (voice, data, pictures, video or the like) between a user moving inside a train and another user connected to a telecommunication network, such that the transmission capacity will be independent of the length of the train and of the distance between successive equipment installed on the ground, in the vicinity of the rail tracks of a railway network.

### CHARACTERISATION OF THE INVENTION

The present invention seeks to overcome or reduce one or more of the above problems by means of a system for transmitting data to a moving unit coupled to a overhead line, a plurality of converting units supplying power to the overhead line, wherein the system includes a first means configured to extract and to inject data signals over the overhead line according to power line communication techniques and, furthermore, the first means likewise being connected to a telecommunication network.

An object of the present invention is to provide a system for transmitting data between the ground and moving vehicles according to Power Line Communication techniques such that the passenger of these vehicles can use the service of bandwidth.

### BRIEF DESCRIPTION OF THE DRAWINGS

The characteristics and advantages of the invention will become more clear with a detailed description thereof, taken together with the attached drawings, in which:
- Figure 1 illustrates a diagrammatic representation of a railway network according to the invention,
- Figure 2 shows detail of overlap between different frequency bands according to the invention, and

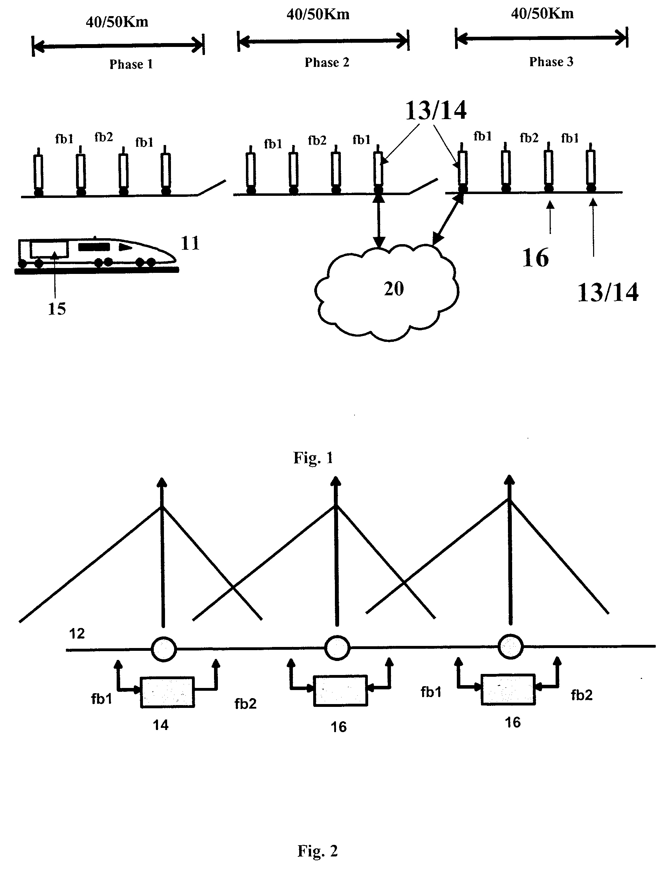

- Figure 1 illustrates a diagrammatic representation of a railway network having radio means according to the invention.

### DESCRIPTION OF THE INVENTION

Figure 1 show a moveable 11 electric consumer of a railway network such as a train receiving power and digital information via the same line, that is, overhead line 12, namely the catenary, shown in figure 2. Therefore, the train 11 should always be in contact with the catenary 12.

Turning now to figure 1, the power is provided to the catenary 12 by means of a plurality of converting 13 means such as transformers, autotransformers which are connected to a power line distribution system. To achieve a desired power over the catenary 12, the converting 13 means are longitudinally spaced to provide the desired power supply. For example, the converting 12 means are serially/symmetrically arranged with respect to the longitudinal axis of track/distributed along the overhead line 12.

According to the invention, at least a converting 13 means comprises first 14 means able to send and to receive information data to and from a telecommunication network 20 such as an IP network. Then, the first 14 means converts the received data from the telecommunication network to a digital signal according to Power Line Communication technique, namely PLC protocol, which is inputting to the catenary 12 and vice versa.

This signal is received at a second 15 means located inside the train 11 such that the second 15 means is conectable a data equipment of the end user, namely train passenger, such as a PC, mobile telephone or the like. And vice versa, when the passenger sends a signal by means of his data equipment connected to the second 15 means, the latter converts this signal into a signal according to PLC protocol which is inputting to the catenary 12, being received in the first 14 means such that the received signal is transformed and inputted to the telecommunication network 20.

Note that the first 14 and second 15 means are power line communication (PLC) modems adapted to send and receive a data signal over the catenary 12. Thus, there may be a bi-directional data transmission between two end users, while one of them travels in the train.

PLC techniques enable enough band width to be provided so that the end users can exchange multimedia information.

Due to the attenuation phenomenon, the bi-directional PLC signal must be re-inputting. Then, the converting 13 means might also include a repeating 16 means for receiving the PLC signal and retransmit, in turn, the same PLC signal over the catenary 12 and so on. The repeating 12 means are positioned at more or less regular intervals.

It should be observed that the repeating 16 means receives the PLC signal over a first frequency fb1 band and re-injects the PLC signal according to a second frequency fb2 band and vice versa, if the repeating means receives the PLC signal according to the second frequency fb2, it will re-inject the PLC signal according to the first frequency fb1.

Each repeating 16 means works with two predetermined frequency bands, thus if it receives data signals in a predetermined frequency band, it will send the received data signal in the other predetermined frequency band. As a result, the interference is reduced.

Therefore, the first 14 and second 15 PLC modems may receive and transmit PLC data in two predetermined frequency bands and, furthermore, these are adapted to inject and to extract data signal to the catenary 12.

In order to save costs, all converting 13 means are not included in the first 14 means which are connected to the telecommunication network. The repeating 16 means will send and receive the received PLC signal to the telecommunication network 20 via the first 14 means.

It should be observed that the first 14 and repeating 16 means might be located together or separately from the converting 13 means, depending on the distance between the converting 13 means. Then, the repeating 16 means and the first 14 means are distributed on the electrical rail track 12 in predetermined spacing.

On the other hand, first means 14 might alone be installed, likewise repeating 16 means.

As each repeating 16 means is not followed or preceded by a first 14 means, when a repeating 16 means receives a data signal, it re-transmits the received PLC signal to another repeating 16 means such that the second 15 means is in continuous contact with a first 14 means by repeating 16 means. Note that the established contact between the second 15 means and the first 14 means may be in the opposite direction of the train travel.

As a result of the catenary 12 being able to carry the same PLC signal over different frequency bands, the second 15 means located at the train 11 may receive both first fb1 and second fb2 frequencies, then the second 15 means includes assessing means for measuring the received PLC signal in each frequency and based on this measurement to chose the frequency over the established communication to be continued, i.e. the second 15 means is able to make a handover process in the same way as the GSM techniques.

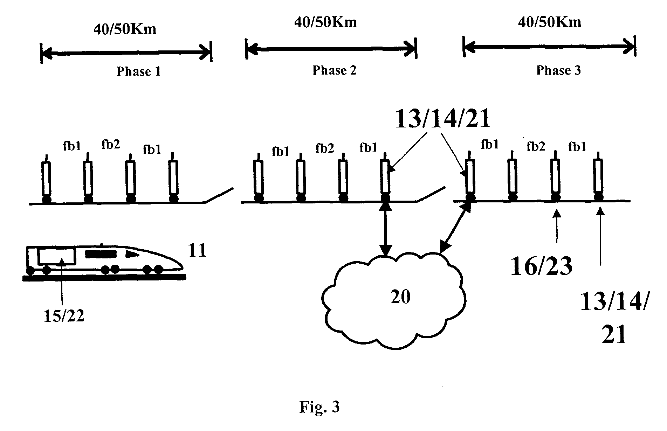

It should be observed that the connection between the train 11 and the telecommunication network 20 may be established by radio in zones wherein the overhead line 12 does not exist, shown in fig. 3. For example, the connection might be established using GSMR techniques.

Turning now to figure 3, a first radio 21 means is connectable to the first 14 means and/or the repeating 16 means, based on which is the last means before a zone wherein there is no catenary 12. Consequently, the second 15 means is connectable to a second radio 22 means such that when the train 12 passes from a zone with overhead line 12 to a zone without overhead line 12 an established link is continued.

Therefore, the second 15 means has a switching means to achieve change between PLC technique and radio communication technique. Obviously, changes can be pre-established because zones are known where the catenary 12 does not exist.

The second 122 radio means is connected to two directional antennas wherein the first antenna points towards the direction of the train travel and the second antenna points towards the opposite direction to the train travel.

Each end of a zone without overhead line 12 is coupled to two directional antennas too, one antenna for each direction of train travel. Obviously, these antennas are coupled to the last means of the zone having overhead line 12.

Likewise, both radio means are able to work with the different frequency fb1, fb2 bands that work the PLC means.

## Claims

1. **System for transmitting data** to a moving object coupled to an overhead line (12), a plurality of converting units supplying power to the overhead line (12); **characterised in that** the system includes a first (14) means configured to extract and to inject data signals over the overhead line (12) according to power line communication techniques.

2. **System** according to claim 1; the first (14) means connected likewise being to a telecommunication network (20).

3. **System** according to claim 2; the first (14) means being adapted to inject into and to extract data signal from the telecommunication network (20) according to a communication technique relating to the telecommunication network (20).

4. **System** according to claim 3; the first (14) means being configured to transmit and to receive data signals to and from the overhead line (12) according to at least two predetermined frequency bands (fb1, fb2).

5. **System** according to claim 1; the system including repeating (16) means which are connected to the overhead line (12) and are distributed on the overhead line (12) in predetermined spacing.

6. **System** according to claim 5; each repeating (16) means receiving the data signal over a first frequency (fb1) band and transmitting the received data signal over a second frequency (fb2) band and vice versa.

7. **System** according to claims 3 and 5; at least a first (14) means and at least a repeating (16) means being connected to receive and to transmit data signals between the overhead line (12) and the telecommunication network (20).

8. **System** according to claim 1; including a second (15) means for receiving and transmitting data signal from and to the overhead line (12) according to PLC techniques.

9. **System** according to claim 8; the second (15) means being configured to transmit and to receive data signal according to at least two predetermined frequency (fb1, fb2) bands.

10. **System** according to claim 9; the second (15) means being able to make changes between received data signals from the different frequency bands during an established communication.

11. **System** according to claim 11; the second (15) means achieving a handover process.

12. **System** according to claim 11; the second (15) means measures the received data signals over predetermined frequency bands and achieves changes of received data signals as a function of the signal level measured.

13. **System** according to claim 12; being an end user that travels in the moving (11) object, able to connect a data equipment to the second (15) means.

14. **Moving unit** including the second (15) means of claims 8 to 13.

15. **Moving unit** according to claim 14, including a second radio means which is connectable to the second (15) means.

16. **Moving unit** according to claim 14, including two antennas coupled to the second radio (22) means such that each antenna points towards each travel direction of the moving (11) unit.

17. **Second means** according to claim 16; being PLC modems.

18. **Second means** according to claim 17; including a switching means to change from the second (15) means to the second radio (22) means or vice versa.

19. **Converting means** including the first (14) means of claims 1 to 4.

20. **Converting means** according to claim 15, including the repeating (16) means of claims 5 to 6.

21. **Converting means** according to claim 16, being the repeating (16) means and the first (14) means connected.

22. **First means** according to claim 19; being a PLC modems.

23. **First means** according to claim 22; including two antennas coupled to the first radio (21) means such that each antenna points towards each travel direction of the moving (11) unit.

24. **Repeating means** according to claim 20; including two antennas coupled to the first radio (21) means such that each antenna points towards each travel direction of the moving (11) unit.
